Europäisches Patentamt

European Patent Office

Office européen des brevets

(11) Veröffentlichungsnummer: **0 113 363**
**B1**

(12) **EUROPÄISCHE PATENTSCHRIFT**

(45) Veröffentlichungstag der Patentschrift:
**19.04.89**

(21) Anmeldenummer: **83902094.8**

(22) Anmeldetag: **06.07.83**

(86) Internationale Anmeldenummer:
**PCT/EP 83/00173**

(87) Internationale Veröffentlichungsnummer:
**WO 84/00339 (02.02.84 Gazette 84/03)**

(51) Int. Cl.⁴: **B 64 C 27/10,** B 64 C 27/14, B 64 C 27/52, B 64 C 27/56

(54) **HUBSCHRAUBER.**

(30) Priorität: **07.07.82 DE 3225308**
**29.09.82 DE 3236027**
**10.01.83 DE 3300578**

(43) Veröffentlichungstag der Anmeldung:
**18.07.84 Patentblatt 84/29**

(45) Bekanntmachung des Hinweises auf die Patenterteilung:
**19.04.89 Patentblatt 89/16**

(84) Benannte Vertragsstaaten:
**AT BE CH DE FR GB LI LU NL SE**

(56) Entgegenhaltungen:
**FR-A-1 038 846**
**US-A-2 461 348**

(73) Patentinhaber: **JUNG, Bernd, Dieselstrasse 22, D-6352 Ober- Mörlen (DE)**

(72) Erfinder: **JUNG, Bernd, Dieselstrasse 22, D-6352 Ober- Mörlen (DE)**

(74) Vertreter: **Stoffregen, Hans- Herbert, Dr. Dipl.- Phys., Patentanwälte Strasse & Stoffregen Salzstrasse 11a Postfach 2144, D-6450 Hanau/Main 1 (DE)**

## Beschreibung

Die Erfindung bezieht sich auf einen Hubschrauber gemäß Oberbegriff des Anspruchs 1.

Es gibt Hubschrauber mit koaxialen Rotorsystemen, bei denen der Antrieb in der Zelle stationär angeordnet ist (US-A-2 037 745). Dadurch ist aufgrund der koaxialen Anordnung der Antriebswellen durch die Rotoren eine aufwendige Konstruktion erforderlich, die außerdem wartungsintensiv und schwer ist.

In der US-A-2 938 679 wird ein Helikopter beschrieben, der eine Rotoren-Antriebseinheit umfaßt, die außerhalb der Zelle angeordnet und um eine einzige Achse verschwenkbar ist. Dabei werden stets zwei Motoren benötigt, ohne die er flug- und manövrierunfähig wäre.

Ein Koaxialrotorsystem der im Oberbegriff des Anspruchs 1 angegeben Gattung ist der FR-A-1 038 846 zu entnehmen, das ausschließlich mit einem Umlaufmotor betrieben werden kann. Der Einsatz von Turbinen oder mehrerer Motoren, die nur wahlweise, also zum Beispiel bei einer Störung eines der Motoren, in Betrieb genommen werden, besteht nicht. Durch die bedingt niedrige Drehzahl des Umlaufmotors muß dieser relativ groß ausfallen, um die benötigte Leistung zu erzielen. Es ergibt sich ein großes Massenträgheitsmoment. Entsprechend groß ist die Kreiselpräzession. Wird das Ausweichen des Motors (Kreisel) verhindert, so entsteht ein Kippmoment, welches demzufolge den ganzen Hubschrauber in eine unkontrollierte Fluglage bringen kann (zum Beispiel Gefahr des Abrutschens). Daher ergibt sich auch keine akzeptable Steuerung durch Verschwenken der Rotoren, da dem rotierenden Motor beim Verschwenken erhebliche Kräfte aufgezwungen werden müssen. Die Versorgung und Ansteuerung der Rotoren bzw. des Antriebs ist aufwendig und kompliziert.

Ausgehend von diesem Stand der Technik liegt der Erfindung die Aufgabe zugrunde, bei einfachem konstruktiven Aufbau eine Instabilität des Hubschraubers auszuschließen, so daß sich eine leichte Manövrierbarkeit auch für ungeschulte Personen, die den Hubschrauber bedienen, ergibt.

Die Aufgabe wird erfindungsgemäß durch das Kennzeichen des Anspruchs 1 gelöst. Durch die erfindungsgemäße Lehre sind die Rotoren und der Antrieb als Einheit in ihrem momentenneutralen Bereich gelagert und zu der Zelle kardanisch verschwenkbar.

Hierdurch ergibt sich eine leichte Manövrierbarkeit, da die aus Rotoren und Antrieb bestehende Einheit, die auch als Primärsystem zu bezeichnen ist, zu der Zelle/Nutzlast des Hubschraubers als Sekundärsystem in ihrem momentenneutralen Bereich kardanisch verschwenkbar ist.

Ausgestaltungen ergeben sich aus den Unteransprüchen 2 - 6.

Weitere Einzelheiten, Vorteile und Merkmale der Erfindung, auf die besonders hingewiesen werden sollen, ergeben sich aus der nachfolgenden Beschreibung von in der Zeichnung dargestellten bevorzugten Ausführungsbeispielen.

Es zeigen:

Fig. 1 eine Ausführungsform eines Hubschraubers,

Fig. 2 und 3 Detaildarstellungen von einer eine Antriebseinheit des Hubschraubers nach Fig. 1 aufnehmenden Halterung und

Fig. 4 eine vergrößerte Darstellung einer Steuerung.

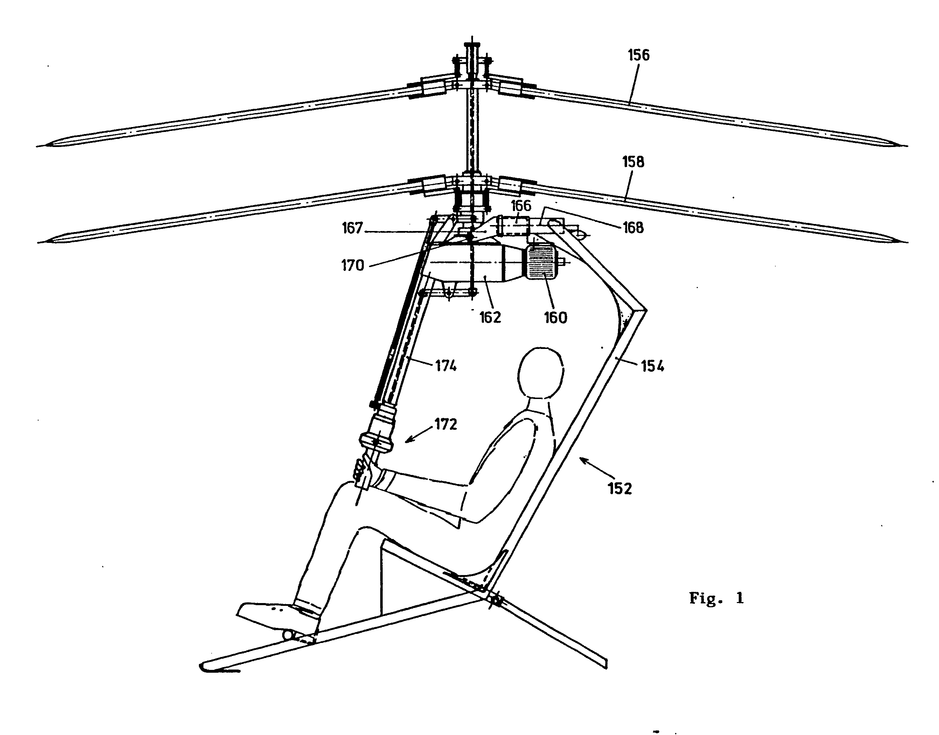

Nach Fig. 1 umfaßt ein schematisch dargestellter Hubschrauber 152 eine Fahrgastzelle 154, oberhalb der koaxial zueinander verlaufende und in gegenläufige Drehbewegungen versetzbare Rotoren 156 und 158 angeordnet sind, deren Kreisdurchmesser (zum Beispiel 3 m) gleich gewählt ist. Der Antrieb, also Antriebsaggregat 160 treibt ein Untersetzungsgetriebe in Form eines Kegelradgetriebes an. Das Getriebe ist von einem Gehäuse 162 umgeben, an das Antriebsaggregat wie z. B. Turbine oder ein oder mehrere Kolbenmotoren befestigt, wie angeflanscht sind.

Das Gehäuse 162 ist im Ausführungsbeispiel nach Fig. 1 von einer Gabel 164 schwenkbar aufgenommen, die ihrerseits um ihre Längsachse 166 drehbar ist. Dabei ist die Gabel 164 von einer Verstrebung 168 der Zelle 154 aufgenommen, die ihrerseits horizontal oder nahezu horizontal verläuft. Der Befestigungspunkt der Gabel 164 in bezug auf das Gehäuse 162 ist ferner so gewählt, daß das Hauptgewicht der Antriebseinheit unterhalb des Befestigungspunkts, also der Drehachse 170 zu liegen kommt, so daß sich dadurch eine optimale Gewichtsverteilung ergibt, die zu einer Vereinfachung der Manövrierbarkeit führt.

Mit anderen Worten ist die aus den Rotoren 156 und 158 und dem Antrieb 160 gebildete Einheit in ihrem momentenneutralen Bereich gelagert und kann durch die Lagerung in der Gabel 164 kardanisch verschwenkt werden.

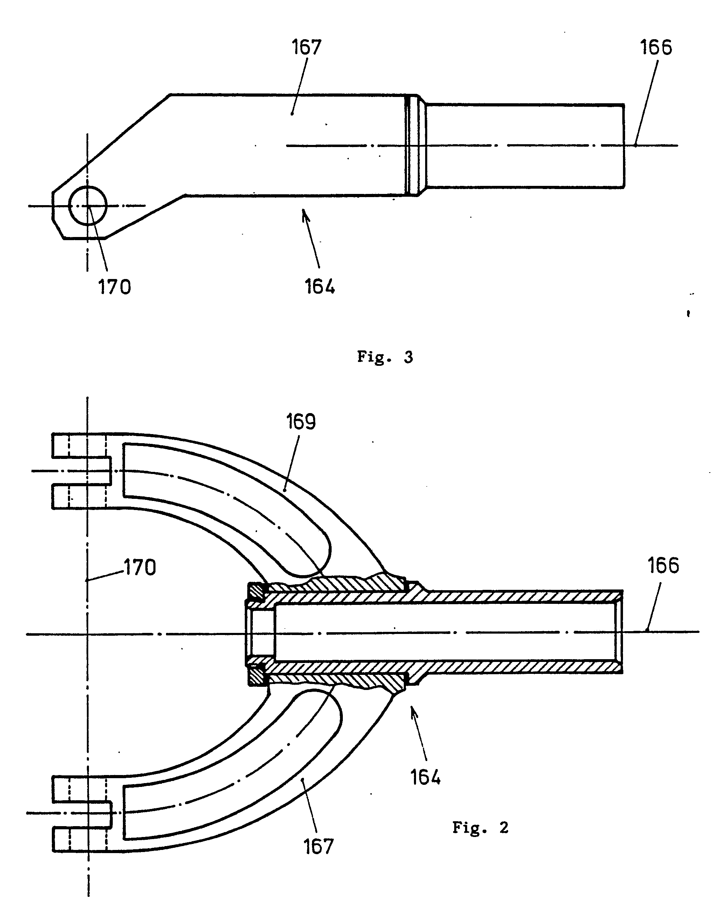

Die die Rotoren-Antriebs-Einheit aufnehmende Gabel 164 ist in Fig. 2 in Draufsicht näher dargestellt. Man sieht, daß die Gabel 164 zwei zueinander beabstandete Schenkel 167 und 169 aufweist, zwischen denen das Gehäuse 162 befestigt ist. Die Drehachse des Gehäuses 162 und damit der Rotoren-Antriebs-Einheit verläuft dabei senkrecht zur Längsachse der Gabel 164, die ihrerseits mit der Längsachse der Verstrebung 168 zusammenfällt. Durch die Wahl einer Gabel, deren Seitenansicht der Fig. 3 zu entnehmen ist, ist erkennbar die kardanische Verschwenkbarkeit überaus einfach ausgebildet, ohne daß dadurch Einbußen hinsichtlich der Funktionstüchtigkeit hingenommen werden müssen.

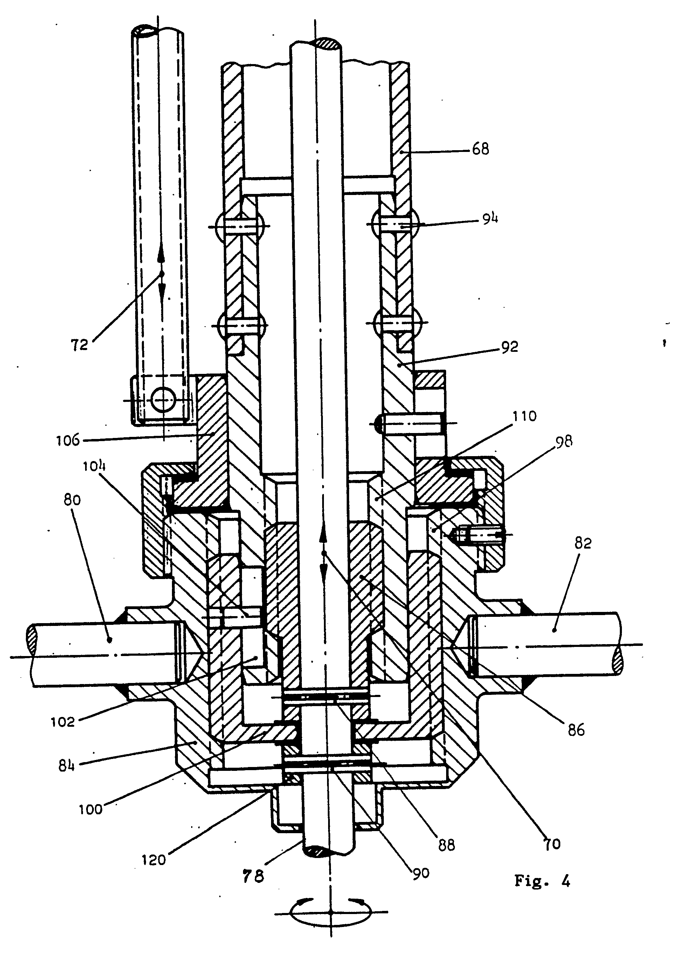

Bezüglich der Steuerung und des Steuerungsmechanismus werden die gleichen Merkmale verwirklicht, die im Zusammenhang mit der Fig. 4 ausführlich erläutert werden. Demzufolge ist ein einen Steuerknüppel 172 aufweisendes Rohr 174 drehsteif mit dem Gehäuse 162 verbunden, um so auf einfache Weise die Rotoren-Antriebs-Einheit verschwenken zu können.

Das kardanische Verschwenken als auch die Verstellbarkeit des Anstellwinkels der Rotorblätter 156 und 158 wird nun mittels eines Steuerknüppels 172 durchgeführt, der am Ende eines mit dem Gehäuse 162 verbundenen Rohres 174 nach Fig. 1 bzw. 68 nach Fig. 4 angeordnet ist. Innerhalb des Rohres 68 wird eine in die Steuerstange 70, für die obere Rotorblattanordnung übergehende Steuerstange 70 geführt. Außerhalb des Rohres 68 verläuft eine Steuerstange 72 zum Verstellen der Rotorblätter 158. Die Steuerstange 72 geht demzufolge oberhalb der Verbindung zwischen dem Rohr 68 und dem Gehäuse in ein Gestänge über, mittels dessen die Rotorblätter 158 verstellt werden können. Wird nun der Steuerknüppel 64 in Achsrichtung des Hubschraubers bewegt, also zum Piloten hingezogen oder von diesem weggedrückt, so erfolgt ein Verschwenken der Rotorantriebseinheit um die Achse 170, so daß dadurch ein Vorwärts- bzw. Rückwärtsflug eingeleitet wird.

Dagegen wird der Seitwärtsflug dann ermöglicht, wenn der Steuerknüppel 64 nach der Seite parallel zur Querachse des Hubschraubers verschwenkt wird.

Der Steuerknüppel 64 umfaßt drei Griffe, die sich in einen mittleren Griff 78 sowie in zwei vorzugsweise diametral oder nahezu diametral zueinander angeordneten äußeren Griffen 80 und 82 aufteilen. Die Griffe 80 und 82 münden in eine drehbar um das Rohr 68 angeordnete Manschette 84. Die innerhalb des Rohres 68 verlaufende Steuerstange 70, die das Verstellen der oberen Rotorblätter bewirkt, geht in den Griff 78 über. Wird nun der Griff 78 gedreht, so erfolgt unter anderem eine Axialbewegung der Stange 70. Damit die Radialbewegung in eine Axialbewegung umgesetzt wird, ist die Stange 70 von einer Hülse 86 umgeben, die über einen Stift 88 mit der Stange 70 verbunden ist. Die Hülse 86 ist nun vorzugsweise mit einem Trapezgewinde versehen, welches mit einem Gegengewinde 110 in Wechselwirkung tritt. Dabei ist das Gegengewinde 110 ein Abschnitt eines hohlzylinderförmigen Rohres 92, das mit dem Rohr 68 über zum Beispiel Nieten oder ähnliches starr verbunden ist.

Von der Hülse 86 und einer weiteren Hülse 120, welche von einem Stift 90 befestigt wird, ist ein hohlzylinderförmiges Element 100 aufgenommen, das einen in ein Langloch 102 hineinragenden Stift 104 aufweist. Dabei ist das Langloch 102 in dem in das Rohr 68 übergehenden Abschnitt 92 eingelassen und verläuft in dessen Längsrichtung. Dadurch bedingt führt der hohlzylinderförmige Körper 100 eine in Längsrichtung des Rohres 68 verlaufende Bewegung aus, wenn die Hülse 86 entlang des Trapezgewindes 110 verdreht wird. Der Körper 100 weist ein Außengewinde auf, das wiederum mit einem von der Manschette 84 angeordneten Innengewinde 98 in Wechselwirkung tritt. Ferner ist die Manschette 84 über ein Verbindungselement 106 mit der Steuerstange 72 verbunden.

Die Funktionsweise des zuvor beschriebenen Steuermechanismus ist nun wie folgt. Werden die diametral oder nahezu diametral zueinander angeordneten Griffe 80 und 82 um die Längsachse des Rohrs 68 gedreht, so wird die Manschette 84 durch das Zusammenwirken mit dem Außengewinde des hohlzylinderförmigen Körpers 100 axial verschoben. Das bedeutet, daß die Steuerstange 72 gleichfalls axial verschoben wird, um somit eine Blattverstellung am unteren Rotor zu ermöglichen. Da gleichzeitig die Blattstellung des oberen Rotors unverändert bleibt, erfolgt ein Drehen um die Hochachse des Hubschraubers.

Wird dagegen der mittlere Griff 78 und damit die Steuerstange 70 gedreht, so wird deren axiale Bewegung über den hohlzylinderförmigen Körper 100 auf die Manschette 84 übertragen, so daß eine synchrone Blattverstellung der Rotoren gegeben ist, also ein Steigen bzw. Sinken ermöglicht wird.

Durch den erfindungsgemäßen Vorschlag werden demzufolge aufgrund des vereinfachten Steuermechanismus alle Steuerfunktionen über einen einzigen Steuerknüppel ausgeführt, also auf diesen zentralisiert.

Ferner sei auf eine weitere Ausgestaltung der Erfindung hingewiesen. So kann der Antrieb als Aggregat einen Freiflugkolbenmotor umfassen, wie er zum Beispiel in der DE-OS-3 029 287 beschrieben ist. Von dem Freiflugkolbenmotor kann sodann ein Turbinenrad -pneumatisch oder hydraulisch- angetrieben werden, um so das Untersetzungsgetriebe zu betätigen. Auch kann das Turbinenrad wahlweise mit Frischgas und/oder Heißgas des Motors betrieben werden. Schließlich besteht die Möglichkeit, das Turbinenrad durch einen Hydraulikmotor zu ersetzen.

Erkennbar wird durch die erfindungsgemäße Lehre eines ein Koaxial-Rotor-System umfassenden Hubschraubers ein Gerät zur Verfügung gestellt, das im Vergleich zu den Bekannten eine überaus leichte Bauweise (zum Beispiel 35 kg Leergewicht) ermöglicht, wodurch sich unter anderem ein günstiges Nutzlastverhältnis ergibt. Durch die leichte Manövrierbarkeit kann ferner die Führung auch von ungeübten Personen ausgeführt werden, ohne daß sich Risiken ergeben. Da die Steuerfunktionen nicht mit Beinen durchgeführt werden müssen, können sogar Querschnittsgelähmte ein entsprechendes Gerät steuern.

**Patentansprüche**

1. Hubschrauber (152) mit zwei koaxial angeordneten, gegenläufigen Rotoren (156, 158), die in Verbindung mit dem Antriebsaggregat (160) als eine Einheit gegenüber der Hubschrauberzelle (154) kardanisch verschwenkbar sind,
dadurch gekennzeichnet, daß die Zelle (154) in ihrem oberen Bereich um eine annähernd horizontal verlaufende Achse (166) an einer Gabel (164) über den Gabelschaft angelenkt ist und daß das Antriebsaggregat (160) über eine die freien Enden der Gabelzinken verbindende Querachse (170) schwenkbar an der Zelle gelagert ist, wobei das Antriebsaggregat mit seiner Hauptmasse unterhalb und die Rotoren (156, 158) oberhalb der Querachse angeordnet sind.

2. Hubschrauber nach Anspruch 1,
dadurch gekennzeichnet, daß die aus den Rotoren (156, 158) und dem Antrieb (160) gebildete verschwenkbare Einheit mit einem einen Steuerknüppel (172) aufweisendem Gestänge in Form eines Rohres (174) verbunden ist, entlang dem zwei Steuerelemente (70, 72) zum gleichzeitigen oder entkoppelten Verstellen der Rotorblätter der Rotoren (156, 158) geführt sind, und daß durch Verschwenken des Steuerknüppels die Rotoren-Antriebs-Einheit verschwenkbar ist.

3. Hubschrauber nach Anspruch 2,
dadurch gekennzeichnet, daß das Rohr (174) an seinem freien unteren Ende von einer drehbar angeordneten mit zwei vorzugsweise diametral zueinander angeordneten (äußeren) Griffen (80, 82) versehenen, mit einer die Rotorblätter des unteren Rotors (158) verstellenden Steuerstange (72) verbundenen Manschette (84) umgeben ist und daß die andere (zweite), die Rotorblätter des oberen Rotors (156) verstellende Steuerstange (70) mit einem Abschnitt innerhalb des Rohres (174) verläuf und in einem (mittleren) Drehgriff (78) unterhalb des Rohres (174) endet.

4. Hubschrauber nach Anspruch 3,
dadurch gekennzeichnet, daß bei Verdrehen des mittleren Drehgriffs (78) eine synchrone axiale Verschiebung beider Steuerstangen (70, 72) erfolgt und daß bei Verdrehen der äußeren Griffe (80, 82) um die Rohrachse die Bewegung der Steuerstangen (70, 72) entkoppelt und nur die äußere Steuerstange (72) axial verschiebbar ist.

5. Hubschrauber nach Anspruch 2,
dadurch gekennzeichnet, daß das den Steuerknüppel (172) umfassende Gestänge bzw. Rohr (174) drehsteif mit der den Antrieb (160, 162) und die Rotoren (156, 158) umfassenden Einheit verbunden ist.

6. Hubschrauber nach zumindest Anspruch 1,
dadurch gekennzeichnet, daß der Antrieb einen Freiflugkolbenmotor umfaßt, der ein Turbinenrad oder einen Hydraulikmotor antreibt, das bzw. der das Untersetzungsgetriebe antreibt, wobei das Turbinenrad hydraulisch oder pneumatisch oder mit Frischgas und/oder Heißgas betreibbar ist.

**Claims**

1. Helicopter (152) with two counter rotating rotors (156, 158) arranged co-axially, which in connection with the drive assembly (160) as one unit can be swivelled by means of a cardan assembly against the helicopter cell (154),
characterized in that the cell (154) in its upper region is coupled over the fork shaft around an approximately horizontal axis (166) to a fork (164) and that the drive assembly (160) is deposited pivotably at the cell over a cross axis (170) connecting the free ends of the fork tines, whereby the drive assembly with its greater part is arranged below the cross axis and the rotors (156, 158) are arranged above the cross axis.

2. Helicopter according to Claim 1,
characterized in that the pivotable unit comprising the rotors (156, 158) and the drive assembly (160) is linked to a rod assembly in form of a pipe (174) having a control stick (172) along which two control elements (70, 72) for the simultaneous or uncoupled adjustment of the rotor blades of the rotors (156, 158) are led and that the rotor-drive assembly-unit can be swivelled by pivoting the control stick.

3. Helicopter according to Claim 2,
characterized in that the pipe (174) is equipped at its free lower end with a collar (84) having two (outer) handles (80, 82) which are preferably in diametrically opposed position and said collar being linked to a control stick (72) adjusting the rotor blades of the lower rotor (158) and that the other (second) control stick (70) adjusting the rotor blades of the upper rotor (156) extends with a section within the pipe (174) and ends in a (center) handle (78) below the pipe (174).

4. Helicopter according to Claim 3,
characterized in that by turning the center handle (78) a synchronous axial displacement of the two control sticks (70, 72) is effected and that by turning the outer handles (80, 82) around the pipe axis the motion of the control sticks is uncoupled and only the outer control stick (72) can be displaced axially.

5. Helicopter according to Claim 2,
characterized in that the rod assembly resp. pipe (174) comprising the control stick (172) is solidly connected to the unit comprising the drive assembly (160, 162) and the rotors (156, 158).

6. Helicopter according, at least, to Claim 1,
characterized in that the drive unit comprises a free floating piston engine which drives a turbine wheel or a hydraulic motor which in turn drives the step-down gear, whereby the turbine wheel can be driven hydraulically or pneumatically or with cold gas and/or hot gas.

**Revendications**

1. Hélicoptère (152) à deux rotors opposés et disposés coaxialement (156, 158), lesquels, en liaison avec le groupe d'entraînement (160), peuvent basculer à la cardan par rapport à la cellule de l'hélicoptère (154),

caractérisé en ce que la cellule (154) est, dans sa partie supérieure, articulée autour d'un axe suivant un tracé quasi-horizontal (166) sur une fourche (16), via la tige de fourche, et en ce que le groupe d'entraînement (160) est monté sur la cellule, tout en étant pivotant, via un axe transversal (170) reliant les extrémités libres des bras de fourche, le groupe d'entraînement étant, avec sa masse principale, disposé au-dessous et les rotors (156, 158) au-dessus de l'axe transversal.

2. Hélicoptère selon la revendication n° 1, caractérisé en ce que l'unité pivotante, constituée par les rotors (156, 158) et l'entraînement (160), est reliée à une tringlerie présentant un manche à balai (172) et conçue sous la forme d'un tube (174) le long duquel deux éléments de commande (70, 72) sont guidés pour le réglage simultané ou autonome des pales des rotors (156, 158) et en ce que l'unité d'entraînement des rotors peut basculer par pivotement de manche à balai.

3. Hélicoptère selon la revendication n° 2, caractérisé en ce que le tube (174) est, à son extrémité inférieure libre, entouré par une manchette (84) pivotante, dotée de deux poignées (extérieures) (80, 82) disposées de préférence diamétralement l'une par rapport à l'autre et reliée à une tige de commande (72) réglant les pales du rotor inférieur (158) et en ce qu'une section de l'autre (de la deuxième) tige de commande (70) réglant les pales du rotor supérieur (156) passe par l'intérieur du tube (174) et que cette tige prend fin dans une poignée tournante (médiane) (78), au-dessous du tube (174).

4. Hélicoptère selon la revendication n° 3, caractérisé en ce que la rotation de la poignée tournante médiane (78) assure un déplacement axiale synchrone des deux tiges de commande (70, 72) et en ce que la rotation des poignées extérieures (80, 82) autour de l'axe du tube découple le mouvment des tiges de commande (70, 72) et en ce que seule la tige de commande extérieure (72) est déplaçable axialement.

5. Hélicoptère selon la revendication n° 2, caractérisé en ce que la tringlerie ou le tube (174) comprenant le manche à balai (172) est reliée, tout en étant rigide en torsion, à l'unité comprenant l'entraînement (160, 162) et les rotors (156, 158).

6. Hélicoptère selon la revendication n° 1 au minimum, caractérisé en ce que l'entraînement comprend un moteur à piston libre qui actionne une roue de turbine ou un moteur hydraulique, laquelle ou lequel actionne le démultiplicateur, la roue de turbine pouvant fonctionner hydrauliquement ou pneumatiquement, ou à l'aide de gaz d'affinage et/ou de gaz chaud.

Fig. 1

EP 0 113 363 B1

Fig. 3

Fig. 2

3

Fig. 4